# EUROPÄISCHE PATENTSCHRIFT

(11) **EP 1 034 964 B1**
(45) Veröffentlichungstag und Bekanntmachung des Hinweises auf die Patenterteilung: **21.01.2004**
(21) Anmeldenummer: 00103203.6
(22) Anmeldetag: 17.02.2000
(51) Int. Cl.: B60K 37/02, B60R 11/02

(54) **Frontrahmen und Verfahren zu seiner Herstellung**
Front panel and method for its production
Panneau frontal et méthode pour sa fabrication

(30) Priorität: 09.03.1999 DE 19910282
(43) Veröffentlichungstag der Anmeldung: 13.09.2000
(73) Patentinhaber: Siemens Aktiengesellschaft, 80333 München (DE)
(72) Erfinder: Zeiss, Manfred, 65428 Rüsselsheim (DE); Klübenspies, Dieter, 65779 Kelkheim (DE); Ritter, Thomas, 63755 Alzenau (DE)

(56) Entgegenhaltungen:
- DE-A- 4 321 711
- DE-A- 19 617 498
- DE-A- 19 654 415
- FR-A- 2 740 422

## Beschreibung

Die Erfindung betrifft einen für ein Kombinationsinstrument, insbesondere eines Fahrzeugs, bestimmten Frontrahmen mit einer eine Anzeige des Kombinationsinstrumentes begrenzenden Blende, wobei die Blende zumindest teilweise mit einem Zierelement abgedeckt ist. Weiterhin betrifft die Erfindung ein Verfahren zur Herstellung eines solchen Frontrahmens.

Frontrahmen der genannten Art werden bei heutigen Kraftfahrzeugen eingesetzt und sind daher bekannt. Dabei ist der Frontrahmen des Kombinationsinstrumentes mittels einer Abdeckscheibe zum Fahrgastraum abgedeckt. Die Blende hat mehrere Durchbrechungen für Zeigerinstrumente, Digitalanzeigen oder Warnlampen, die auf einem rückwärtigen Instrumententräger angeordnet sind.

Die Blende ist zumindest teilweise mit dem Zierelement kaschiert, welches in einer einfachen Ausführung lediglich in einer Kontrastfarbe lackiert ist oder bei aufwendigeren Ausführungsformen neben rein gestalterischen Elementen auch mit Aufdrucken versehen sein kann, mit deren Hilfe die Funktionalität oder die Ablesbarkeit des Kombinationsinstrumentes verbessert oder das Verständnis der Anzeige erleichtert wird. Zu diesem Zweck wird das Zierelement beispielsweise mit einer Beschichtung bzw. einem Aufdruck versehen.

Nachteilig wirkt sich hierbei aus, dass das Zierelement gegenüber der Anzeige exakt positioniert werden muss. Durch die Anordnung des Zierelementes im ständigen Blickfeld des Fahrers, sind bereits kleinste Abweichungen für den Betrachter erkennbar und vermitteln so einen minderwertigen Eindruck des Kombinationsinstrumentes. Die zur Vermeidung solcher Abweichungen erforderliche Einhaltung geringer Toleranzen ist dabei mit einem erheblichen Herstellungsaufwand verbunden.

Bei anderen Kombinationsinstrumenten ist das Zierelement als bedruckte Folie ausgeführt, die in einem weiteren Arbeitsgang auf die Blende aufgeklebt werden muss. Hierbei muss die Folie sehr exakt ausgeschnitten und sorgfältig verlegt werden, da anderenfalls Überstände und Lücken entstehen. Insbesondere dürfen die Außenränder der Folie nicht über die Blende hinausragen. Dabei wirkt sich weiterhin nachteilig aus, dass die Folie im Laufe der Zeit Alterungserscheinungen zeigt, die beispielsweise zu Faltenbildung und Rissen, aber auch zum Ablösen der Folie von der Blende führen können.

Aus der DE 196 54 415 A1 ist ein Kombinationsinstrument gemäß Oberbegriff des Anspruchs 1 bekannt, bei dem der Frontrahmen mit dem Gehäuse vernietet, verschraubt, verschweißt und/oder verklebt ist.

Der Erfindung liegt das Problem zugrunde, einen Frontrahmen der eingangs genannten Art so zu gestalten, dass das Zierelement problemlos und ohne nennenswerten Herstellungsaufwand an der Blende angeordnet werden kann. Dabei sollen insbesondere Falten oder Risse, die zu einem minderwertigen Eindruck führen, verhindert werden. Weiterhin soll ein Verfahren zur Herstellung eines solchen Frontrahmens geschaffen werden.

Das erstgenannte Problem wird erfindungsgemäß dadurch gelöst, dass das Zierelement als ein mit dem Frontrahmen formschlüssig verbundenes Formteil ausgeführt ist. Hierdurch kann das Zierelement unabhängig von dem Frontrahmen vorgefertigt werden und braucht anschließend lediglich mit dem Frontrahmen verbunden zu werden. Im Vergleich zu einer Folie ist das Formteil erheblich problemloser in der Handhabung und ermöglicht beispielsweise durch Verwendung von Passstiften eine exakte Positionierung. Durch eine Auswahl eines geeigneten Materials, die hierbei auch unabhängig von dem Material des Frontrahmens erfolgen kann, werden auch Alterungserscheinungen oder Schäden durch starke Sonneneinstrahlung verhindert. Hierzu kann das Formteil auch aus einem Metall gefertigt und als Träger von Bauteilen, beispielsweise einer flachen Flüssigkristallanzeige, ausgeführt sein. Eine gegebenenfalls erforderliche Lackierung oder Beschichtung kann durch die Ausführung als separates Formteil zugleich wesentlich einfacher, insbesondere getrennt von den übrigen Bauteilen des Kombinationsinstrumentes, erfolgen.

Durch die formschlüssige Verbindung lassen sich in einfacher Weise Toleranzwerte vorsehen, die insbesondere die Montage erleichtern. Zugleich können unterschiedliche Wärmedehnungen ausgeglichen werden, so dass beispielsweise bei direkter Sonneneinstrahlung keine Verformung des Kombinationsinstrumentes auftritt.

Hierbei ist eine besonders einfache Ausbildung der Erfindung dadurch gegeben, dass das Formteil mit dem Frontrahmen durch elastische Verformung eines Abschnitts des Frontrahmens entsprechend einer Clipsverbindung verbunden ist. Die Montage des Formteils erfordert hierdurch kein spezielles Werkzeug, so dass beispielsweise auch eine Nachrüstung des Formteils bei vorhandenen und entsprechend vorbereiteten Kombinationsinstrumenten mühelos möglich ist und so eine individuelle, dem Geschmack des Benutzers entsprechende Gestaltung ermöglicht wird.

Das Formteil kann einen von dem Frontrahmen umschlossenen Randbereich aufweisen. Der Randbereich des Formteiles ist somit für einen Betrachter des Kombinationsinstrumentes nicht sichtbar. Mögliche Fertigungstoleranzen sind daher für das optische Erscheinungsbild unerheblich. Hierzu kann der Frontrahmen insbesondere auch eine umlaufende Nut in Form einer Hinterschneidung aufweisen, in die das Formteil formschlüssig einsetzbar ist und so beispielsweise zugleich als eine Clipsverbindung ausgeführt ist.

Eine andere besonders vorteilhafte Weiterbildung der Erfindung ist auch dann erreicht, wenn das Formteil eine an die Anzeige angrenzende und dieser zugeneigte Begrenzungsfläche aufweist. Diese aus gestalterischen Überlegungen heraus wünschenswerte Begrenzungsfläche ermöglicht ähnlich eines Passepartouts eine optisch ansprechende Abgrenzung der Anzeige. Hierzu kann die auch als Tubusrahmen bekannte Begrenzungsfläche insbesondere in eine Ausnehmung der Blende hineinragen und eine abgesetzte Farbgebung aufweisen.

Hierzu ist eine besonders effektive Weiterbildung dadurch gegeben, dass die Begrenzungsfläche die Anzeige im wesentlichen trichterförmig einschließt. Dadurch kann neben einem optisch ansprechenden Eindruck zugleich auch eine einfache Zentrierung der trichterförmigen Begrenzungsfläche innerhalb der entsprechenden Ausnehmung der Blende erreicht werden.

Das zweitgenannte Problem, die Schaffung eines Verfahrens zur Herstellung eines für ein Kombinationsinstrument, insbesondere eines Fahrzeugs, bestimmten Frontrahmens mit einer eine Anzeige des Kombinationsinstrumentes begrenzenden Blende, wobei die Blende zumindest teilweise mit einem Zierelement abgedeckt ist, wird erfindungsgemäß dadurch gelöst, dass das Zierelement zunächst als Formteil vorgefertigt, anschließend in ein Spritzgießwerkzeug eingelegt und schließlich der Frontrahmen so gespritzt wird, dass ein vorderer Abschnitt des Frontrahmens einen Randbereich des Formteils umgreift. Hierdurch kann der Frontrahmen in einem gemeinsamen Arbeitsgang hergestellt und mit dem Formteil verbunden werden. Dadurch entsteht eine wahlweise kraft- oder formschlüssige Verbindung, die beispielsweise auch lösbar sein kann. Die Verbindung ist durch den Abschnitt des Frontrahmens, der den Randbereich des Formteils umgreift, für einen Betrachter nicht sichtbar, so dass ein einwandfreies Erscheinungsbild mühelos erreicht werden kann. Der Herstellungsaufwand ist dabei vergleichsweise gering.

Dabei ist eine besonders vorteilhafte Weiterbildung des erfindungsgemäßen Verfahrens dann gegeben, wenn das Formteil zunächst in einem Tiefziehverfahren hergestellt wird. Dadurch erhält das Formteil bereits ein hohes Maß an Eigenstabilität. Zugleich ermöglicht die Formgebung eine problemlose Positionierung des Formteils bei dem folgenden Spritzgießverfahren.

Eine besonders einfache Weiterbildung des Verfahrens ist dadurch gegeben, dass der Frontrahmen im Spritzgießverfahren einteilig mit der Blende verbunden wird. Hierdurch kann der Fertigungsaufwand weiter reduziert werden. Das hinzukommende Formteil dient dabei im wesentlichen dem optischen Erscheinungsbild, während die Blende als Bauelement des Kombinationsinstrumentes zugleich auch als Strukturelement dient.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Vorderansicht eines Kombinationsinstrumentes mit dem erfindungsgemäßen Frontrahmen,
- Fig. 2: eine geschnittene Seitenansicht des Frontrahmens des Kombinationsinstrumentes.

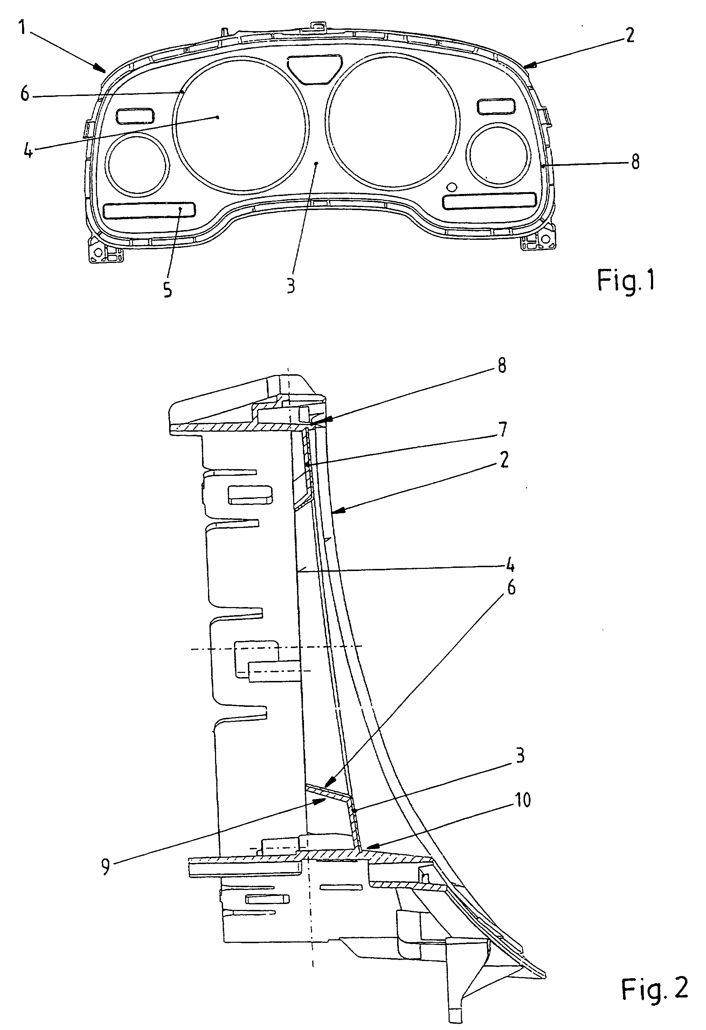

Figur 1 zeigt in einer Vorderansicht ein Kombinationsinstrument 1 mit einem Frontrahmen 2 und einem als Zierelement ausgeführten Formteil 3, welches eine in Figur 2 gezeigte Blende 7 abdeckt. Das Formteil 3 begrenzt mehrere Ausnehmungen 4 für nicht dargestellte Zeigerinstrumente und weitere Ausnehmungen 5 für ebenfalls nicht dargestellte Anzeigen des Kombinationsinstrumentes 1. Hierzu hat das Formteil 3 jeweils eine an die Ausnehmungen 4, 5 angrenzende, abgeschrägte Begrenzungsfläche 6, die neben einer verbesserten Optik auch zur Positionierung des Formteils 3 an der in Figur 2 gezeigten Blende 7 dienen kann. Das Formteil 3 ist weiterhin an dem Frontrahmen 2 mittels eines als Hinterschneidung ausgeführten umlaufenden Abschnitts 8 fixiert, der einen nicht sichtbaren Randbereich des Formteils 3 formschlüssig umgreift.

Figur 2 zeigt in einer Schnittdarstellung eine Seitenansicht des Frontrahmens 2 des in Figur 1 gezeigten Kombinationsinstrumentes 1. Zu erkennen ist die einteilig mit dem Frontrahmen 2 verbundene Blende 7, die durch das Formteil 3 abgedeckt ist. Das Formteil 3 grenzt mit seiner schräg verlaufenden Begrenzungsfläche 6 an die Ausnehmung 4 für ein nicht gezeigtes Zeigerinstrument an und liegt auf einer entsprechend geformten Abbiegung 9 der Blende 7 auf. Das Formteil 3 hat zur Fixierung einen Randbereich 10, den der als Hinterschneidung ausgeführte Abschnitt 8 des Frontrahmens 2 umgreift, so dass das Formteil 3 für einen Betrachter unsichtbar formschlüssig gehalten ist. Diese Ausführung des Formteiles 3 ermöglicht eine einfache Fertigung des Kombinationsinstrumentes 1, indem das vorgefertigte Formteil 3 während des Spritzgießverfahrens des Frontrahmens 2 in das Spritzgießwerkzeug eingelegt und den Frontrahmen 2 bildend hinter- und (im Bereich des als Hinterschneidung ausgeführten Abschnitts 8) umspritzt wird. Dabei kann das Formteil 3 sowohl lediglich als Träger von Zierelementen als auch als Informationsträger dienen. Das Formteil 3 kann hierzu aus beliebigen Materialien hergestellt sein und beispielsweise auch transparente Abschnitte aufweisen.

Durch den das Formteil 3 umschließenden Abschnitt 8 des Frontrahmens 2 entsteht eine einwandfreie Positionierung des Formteils 3, wobei zugleich die Möglichkeit gegeben ist, Fertigungstoleranzen oder Wärmedehnungen auszugleichen. Je nach Gestaltung des Abschnitts 8 kann das Formteil 3 auch lösbar mit dem Frontrahmen 2 verbunden oder auch durch elastische Verformung des Abschnitts 8 entsprechend einer Clipsverbindung fixiert werden.

## Patentansprüche

1. Für ein Kombinationsinstrument (1), insbesondere eines Fahrzeugs , bestimmter Frontrahmen (2) mit einer eine Anzeige des Kombinationsinstrumentes (1) begrenzenden Blende (7), wobei die Blende (7) zumindest teilweise mit einem Zierelement abgedeckt ist, **dadurch gekennzeichnet, dass** das Zierelement als ein mit dem Frontrahmen (2) formschlüssig verbundenes Formteil (3) ausgeführt ist.

2. Frontrahmen nach Anspruch 1, **dadurch gekennzeichnet, dass** das Formteil (3) mit dem Frontrahmen (2) durch elastische Verformung eines Abschnitts (8) des Frontrahmens (2) entsprechend einer Clipsverbindung verbunden ist.

3. Frontrahmen nach einem der vorhergehenden Ansprüche, **dadurch gekennzeichnet, dass** das Formteil (3) einen von dem Frontrahmen (2) umschlossenen Randbereich (10) aufweist.

4. Frontrahmen nach einem der vorhergehenden Ansprüche, **dadurch gekennzeichnet, dass** das Formteil(3) eine an die Anzeige angrenzende und dieser zugeneigte Begrenzungsfläche (6) aufweist.

5. Frontrahmen nach Anspruch 4, **dadurch gekennzeichnet, dass** die Begrenzungsfläche (6) die Anzeige im wesentlichen trichterförmig umschließt.

6. Spritzgießverfahren zur Herstellung eines für ein Kombinationsinstrument (1), insbesondere eines Fahrzeugs, bestimmten Frontrahmens (2) mit einer eine Anzeige des Kombinationsinstrumentes begrenzenden Blende (7), wobei die Blende (7) zumindest teilweise mit einem Zierelement abgedeckt ist, **dadurch gekennzeichnet, dass** das Zierelement zunächst als Formteil (3) vorgefertigt, anschließend in ein Spritzgießwerkzeug eingelegt und schließlich der Frontrahmen (2) so gespritzt wird, dass ein vorderer Abschnitt (8) des Frontrahmens (2) einen Randbereich (10) des Formteils (3) umgreift.

7. Spritzgießverfahren nach Anspruch 6, **dadurch gekennzeichnet, dass** das Formteil zunächst in einem Tiefziehverfahren hergestellt ist.

8. Spritzgießverfahren nach einem der vorhergehenden Ansprüche 6 und 7, **dadurch gekennzeichnet, dass** der Frontrahmen (2) im Spritzgießverfahren einteilig mit der Blende (7) verbunden wird.

## Claims

1. Front frame (2) which is intended for a combination instrument (1), in particular of a vehicle, and has a cover (7) forming a boundary around a display of the combination instrument (1), the cover (7) being at least partially covered with a decorative element, **characterized in that** the decorative element is designed as a moulding (3) which is connected to the front frame (2) with a form fit.

2. Front frame according to one of the preceding claims, **characterized in that** the moulding (3) is connected to the front frame (2) by means of elastic deformation of a section (8) of the front frame (2) corresponding to a clip connection.

3. Front frame according to one of the preceding claims, **characterized in that** the moulding (3) has an edge region (10) which is surrounded by the front frame (2) .

4. Front frame according to one of the preceding claims, **characterized in that** the moulding (3) has a boundary surface (6) which is adjacent to the display and is inclined towards it.

5. Front frame according to Claim 7, **characterized in that** the boundary surface (6) encloses the display essentially in a funnel-shaped manner.

6. Injection moulding process for producing a front frame (2) which is intended for a combination instrument (1), in particular of a vehicle, and has a cover (7) forming a boundary around a display of the combination instrument, the cover (7) being at least partially covered with a decorative element, **characterized in that** first of all the decorative element is premanufactured as a moulding (3), subsequently is placed into an injection mould and finally the front frame (2) is injected in such a manner that a front section (8) of the front frame (2) grips around an edge region (10) of the moulding (3).

7. Injection moulding process according to Claim 6, **characterized in that** first of all the moulding is produced in a thermoforming process.

8. Injection moulding process according to one of the preceding Claims 6 or 7, **characterized in that** the front frame (2) is integrally connected to the cover (7) in the injection moulding process.

## Revendications

1. Panneau frontal (2) destiné à un tableau de bord (1), en particulier d'un véhicule, avec un cache (7) délimitant un affichage du tableau de bord, le cache (7) étant recouvert au moins partiellement d'un élément décoratif, **caractérisé en ce que** l'élément décoratif est exécuté comme une pièce moulée (3) assemblée avec le panneau frontal (2) par engagement positif.

2. Panneau frontal selon la revendication 1, **caractérisé en ce que** la pièce moulée (3) est assemblée avec le panneau frontal (2) par déformation élastique d'un segment (8) du panneau frontal (2) à l'instar d'un assemblage par clips.

3. Panneau frontal selon l'une des revendications précédentes, **caractérisé en ce que** la pièce moulée (3) présente une zone marginale (10) entourée par le panneau frontal (2).

4. Panneau frontal selon l'une des revendications précédentes, **caractérisé en ce que** la pièce moulée (3) présente une surface de délimitation (6) contiguë à l'affichage et s'inclinant vers celui-ci.

5. Panneau frontal selon la revendication 4, **caractérisé en ce que** la surface de délimitation (6) entoure l'affichage substantiellement en forme d'entonnoir.

6. Procédé de moulage par injection pour la fabrication d'un panneau frontal (2) destiné à un tableau de bord (1), en particulier de véhicule, avec un cache (7) délimitant l'affichage du tableau de bord, le cache (7) étant recouvert au moins partiellement d'un élément décoratif, **caractérisée en ce que** l'élément décoratif est préfabriqué d'abord comme pièce moulée (3), et est ensuite introduit dans un moule pour injection et que finalement le panneau frontal (2) est moulé par injection de manière à ce qu'un segment (8) avant du panneau frontal (2) saisisse une zone marginale (10) de la pièce moulée (3).

7. Procédé de moulage par injection selon la revendication 6, **caractérisée en ce que** la pièce moulée est fabriquée d'abord selon un procédé d'emboutissage profond.

8. Procédé de moulage par injection selon l'une des revendications précédentes 6 et 7, **caractérisée en ce que** le panneau frontal (2) est assemblé en une seule pièce avec le cache (7) selon un procédé de moulage par injection.
